# FASCICULE DE BREVET EUROPEEN

(11) **EP 1 187 679 B1**
(45) Date de publication et mention de la délivrance du brevet: **23.07.2003**
(21) Numéro de dépôt: 00951632.9
(22) Date de dépôt: 21.06.2000
(51) Int. Cl.: B01L 3/00, F16K 11/02

(54) **VANNES PERMETTANT DE DIRIGER UN FLUIDE DANS UNE CARTE D'ANALYSE, CARTES D'ANALYSE ET DISPOSITIF D'ANALYSE COMPRENANT PLUSIEURS CARTES**
VENTIL ZUR EINLEITUNG EINES FLUIDUMS IN EINEN ANALYSE-CHIP, ANALYSE-CHIPS SOWIE ANALYSE-GERÄT MIT MEHREREN ANALYSE-CHIPS
VALVES ENABLING A LIQUID TO BE DIRECTED IN A DIAGNOSTIC CHART, DIAGNOSTIC CHARTS AND DIAGNOSTIC DEVICE COMPRISING SEVERAL CHARTS

(30) Priorité: 22.06.1999 FR 9908116
(43) Date de publication de la demande: 20.03.2002
(73) Titulaire: Biomerieux S.A., 69280 Marcy l'Etoile (FR)
(72) Inventeur: COLIN, Bruno, F-69280 Marcy l'Etoile (FR); DACHAUD, Jacques, F-25000 Besancon (FR)
(74) Mandataire: Bonneau, Gérard
(86) Numéro de dépôt international: FR0001719
(87) Numéro de publication internationale: WO00078453

(56) Documents cités:
- EP-A- 0 779 103
- WO-A-97/22825
- WO-A-97/27324
- WO-A-98/00231
- WO-A-99/03584
- GB-A- 2 097 692
- US-A- 3 998 571
- US-A- 4 852 851
- US-A- 5 945 334

## Description

La présente invention concerne le domaine des vannes qui sont utilisées pour diriger au moins un fluide mû par des moyens de transfert au sein d'une carte d'analyse. Elle concerne également une carte équipée d'un dispositif permettant de mettre en oeuvre plusieurs cartes équipées de telles vannes.

*Jusqu'à présent la plupart des cartes d'analyse comportent des évidements sur leurs deux faces planes et parallèles ainsi que des évidements transversaux, l'ensemble de ces évidements constituant un réseau de canaux dans lequel un ou plusieurs fluides sont déplacés. Lesdits évidements sont délimités, au niveau des faces, par des films autocollants. Le contrôle des déplacements de fluides est assuré par des vannes.*

Ce type de structure n'est pas réutilisable, puisque l'utilisation d'une vanne n'est efficace qu'une seule fois. Ainsi lorsque la vanne est basculée en position fermée, la surface autocollante du film vient également en contact avec le reste de la carte, et la vanne ne peut alors plus être utilisée. La vanne reste en position fermée.

*La seule solution reste donc le dépôt sur un film inerte, c'est-à-dire non collant, d'une couche autocollante comportant préalablement des découpes par l'action d'emporte-pièce.*

Ceci n'est pas aisé à réaliser techniquement, de plus le coût de fabrication d'un tel film ainsi que les difficultés du bon positionnement de ce film sur la carte d'analyse, seraient incompatibles avec une production en très grande quantité.

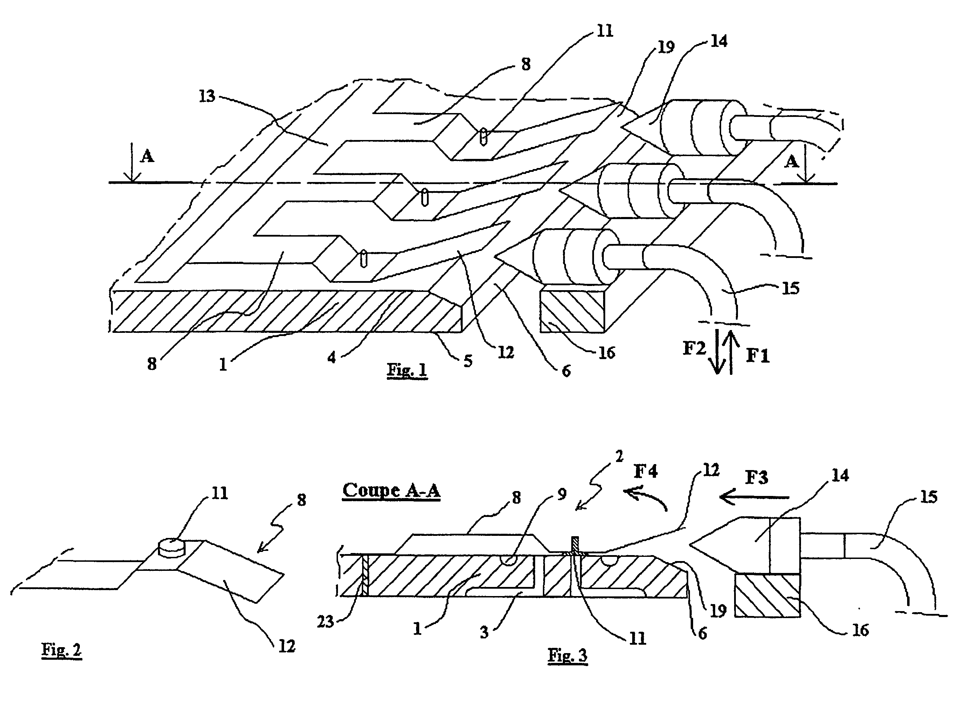

*La demanderesse a déposé une demande de brevet en date du 8 septembre 1998. sous le numéro FR98*/*11383. Cette invention concerne un dispositif ou carte d'analyse permettant de conduire une réaction ou au moins deux réactions en parallèle ou en série en son sein. Le dispositif est constitué par, d'une part, un réseau de canaux au sein duquel le transfert d'au moins un échantillon à traiter et*/*ou à analyser est* *possible, et d'autre part, au moins une vanne incorporée au dispositif permettant l'orientation de chaque échantillon transféré au niveau du réseau et donc le contrôle des transferts, des réactions et des analyses dans ledit dispositif. Dans le mode de réalisation des figures 1 à 3, on remarque qu'une pastille en élastomère est insérée entre le film autocollant et le corps de la carte, ce qui autorise une réutilisation de la vanne.*

Cette structure apporte donc bien une solution, néanmoins ceci augmente le nombre d'éléments et le coût pour permettre de réaliser une carte d'analyse fonctionnelle.

*Le document WO-A-97*/*27324 essaie de trouver une solution à ce problème. Ainsi, il concerne une cassette pour conduire en parallèle des réactions qui comporte une ouverture d'entrée et une ouverture de sortie pour le transfert du ou des échantillons à introduire dans la cassette. Des vannes sont présentes au niveau de la cassette, qui ont une construction particulière (chambre de Bursapak, soupape à piston, valve à bille). Ces vannes permettent, sous l'action d'une force extérieure continue, de maintenir un canal fermé. Dans ce mode de réalisation, le film est soudé sur la cassette.*

Toutefois, cette construction comporte un inconvénient majeur. Celui-ci consiste en la déformation de la face de la cassette subissant la soudure du film. Alors qu'à l'origine cette face est complètement plane la soudure entraîne une déformation préjudiciable à la bonne utilisation ultérieure de la cassette. Ceci peut aller de l'erreur de manipulation et/ou d'analyse à l'impossibilité de faire fonctionner les vannes. Le pire des problèmes peut être rencontré lorsque ce type de cassette est utilisé au sein d'un automate, ce qui est généralement le cas. Dans cette configuration, la carte déformée par la soudure peut bloquer l'ensemble de l'automate, voire le détériorer.

Un autre inconvénient de cette innovation réside dans l'absolue nécessité d'avoir une soudure précise du film sur la carte. Une erreur infime peut entraîner un bouchage de canaux et/ou une fuite de la vanne.

La présente invention apporte une réponse concrète à l'ensemble des inconvénients de l'état de la technique. Ainsi, la soudure du film sur le corps de la carte d'analyse s'effectue sans détérioration de la face où la soudure est réalisée. De plus, la tolérance pour la position de la soudure est plus grande, puisque celle-ci ne fait que circonscrire la zone constituant la vanne et ne l'épouse pas au plus près.

A cet effet, la présente invention concerne une vanne, traversée par au moins un canal, permettant de diriger au moins un fluide mû par des moyens de transfert au sein d'une carte d'analyse, la carte comportant deux faces reliées l'une à l'autre par un bord, caractérisée par le fait qu'elle est constituée d'une part d'un film, flexible et/ou qui peut être déformé, fixé en partie sur au moins l'une des faces de ladite carte, et d'autre part d'un moyen de compression du film, moyen qui peut être activé ou désactivé, et que la fixation est réalisée au niveau d'au moins l'une des faces, par exemple plane, par l'intermédiaire d'une fixation située au niveau d'un renfoncement périphérique à la vanne, tel qu'une rainure.

Selon une variante de réalisation, la fixation du film sur la carte est périphérique à l'ensemble des canaux concerné par la vanne, à savoir au moins un canal d'arrivée d'un fluide et au moins un canal de départ d'un fluide, les deux fluides pouvant être identiques ou différents.

Selon une autre variante de réalisation, la fixation est assurée par une soudure périphérique à la vanne.

Toujours selon une autre variante de réalisation, le moyen de compression agit sur le film au niveau du point d'intersection entre au moins l'un des canaux de la vanne et la face concernée de la carte.

Selon encore une autre variante de réalisation, le moyen de compression est constitué par une languette flexible.

Toujours selon une variante de réalisation, le moyen de compression comporte un moyen de fermeture, tel qu'un pion en élastomère, et un moyen d'ouverture ou de fermeture, tel qu'un biseau, qui coopère avec des moyens d'actionnement.

L'invention concerne aussi une carte d'analyse constituée d' au moins deux vannes qui sont positionnées côte à côte, et les moyens de compression affectés à la compression des vannes, positionnées côte à côte, qui sont reliés les uns aux autres pour former une lamelle en bande.

Préférentiellement, deux vannes adjacentes positionnées côte à côte sont séparées avec un pas compris entre 1 et 5 mm, et préférentiellement avec un pas ayant des valeurs utilisées dans le domaine électronique, telles que 3,96 mm, 2,54 mm ou 1,28 mm.

Selon un autre mode préférentiel de réalisation, le film, au niveau de la vanne, est au contact de la face plane de la carte, lorsque ladite vanne est en position fermée, et est surélevée par rapport à ladite face plane, lorsque la vanne est en position ouverte.

Lorsque la carte est en forme sensiblement de parallélépipède, le ou les bords, où sont présentes les vannes, sont rectilignes, et la distance séparant ledit bord par rapport au point d'implantation de chaque vanne est constante.

L'invention concerne encore un dispositif permettant de mettre en oeuvre plusieurs cartes, décrites ci-dessus. Ce dispositif est constitué par :
- une zone de stockage des cartes qui sont disposées parallèlement les unes aux autres,
- une zone de contrôle de l'ouverture et de la fermeture des vannes associée à une commande manuelle ou automatique, et
- une zone intermédiaire servant d'interface entre les zones de stockage et de contrôle;
les cartes sont disposées dans la zone de stockage avec l'ensemble des vannes d'un même bord situé dans un même plan faisant face à la zone intermédiaire, la zone de contrôle est constituée d'actionneurs, tels que des électro-aimants, dont les mouvements longitudinaux s'effectuent en direction de ladite zone intermédiaire, et cette zone intermédiaire est constituée de pions de manoeuvre ayant au moins deux positions, l'une permettant l'ouverture l'autre permettant la fermeture des vannes.

Selon un autre mode de réalisation, le dispositif possède un actionneur par carte, et un pion de manoeuvre par vanne.

Selon encore un autre mode de réalisation, le mouvement de l'actionneur est coaxial à l'axe longitudinal du pion de manoeuvre et de la vanne, qui est activée ou désactivée.

Toujours selon un autre mode de réalisation, l'ensemble des actionneurs est monté dans le même plan et est mobile selon un axe parallèle au plan formé par l'ensemble des bords des cartes portant les vannes qui peuvent être actionnées par ces actionneurs.

Selon un autre mode de réalisation, les pions de manoeuvre ont deux positions possibles, l'une permettant l'ouverture l'autre permettant la fermeture des vannes, chaque position étant de part et d'autre d'un élément de délimitation.

Préférentiellement, l'élément de délimitation est mobile entre deux positions extrêmes, l'une où il empêche le mouvement des pions, et l'autre où ce mouvement desdits pions est possible.

Les figures ci-jointes sont données à titre d'exemple explicatif et n'ont aucun caractère limitatif. Elles permettront de mieux comprendre l'invention.

La figure 1 représente une vue en perspective d'une carte d'analyse selon un mode préférentiel de réalisation de la présente invention.

La figure 2 représente une vue en perspective du dessous de l'une des lames flexibles présentées à la figure 1.

La figure 3 représente une vue en coupe selon A-A de la figure 1.

La figure 4 représente une vue de dessus de la carte d'analyse, lorsque les languettes ont été retirées.

La figure 5 représente une vue en coupe selon B-B de la figure 4, lorsque la vanne est en position fermée.

La figure 6 représente une vue en coupe identique à la figure 5, lorsque la vanne est en position ouverte.

La figure 7 représente une vue en coupe identique à la figure 3, la languette ayant une structure différente et un mode de fonctionnement opposé à celui des figures précédentes.

La figure 8 représente une vue en coupe, avant assemblage par soudure, d'un corps de carte d'analyse et d'un film flexible selon l'état de la technique.

La figure 9 représente une vue en coupe, après assemblage par soudure, d'un corps de carte d'analyse et d'un film flexible selon l'état de la technique.

La figure 10 représente une vue en coupe, avant assemblage par soudure, d'un corps de carte d'analyse et d'un film flexible selon la présente invention.

La figure 11 représente une vue en coupe, après assemblage par soudure, d'un corps de carte d'analyse et d'un film flexible selon la présente invention.

La figure 12 représente en coupe partielle d'un dispositif permettant de mettre en oeuvre plusieurs cartes équipées de vannes décrites ci-dessus.

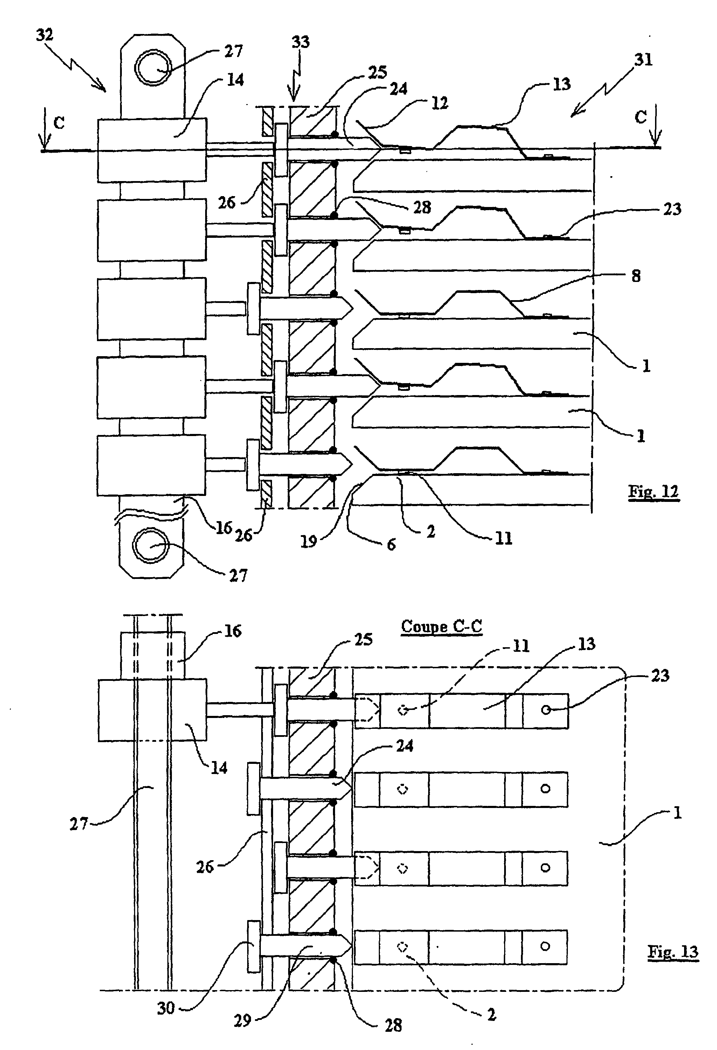

Enfin, la figure 13 représente une vue en coupe selon C-C de la figure 12.

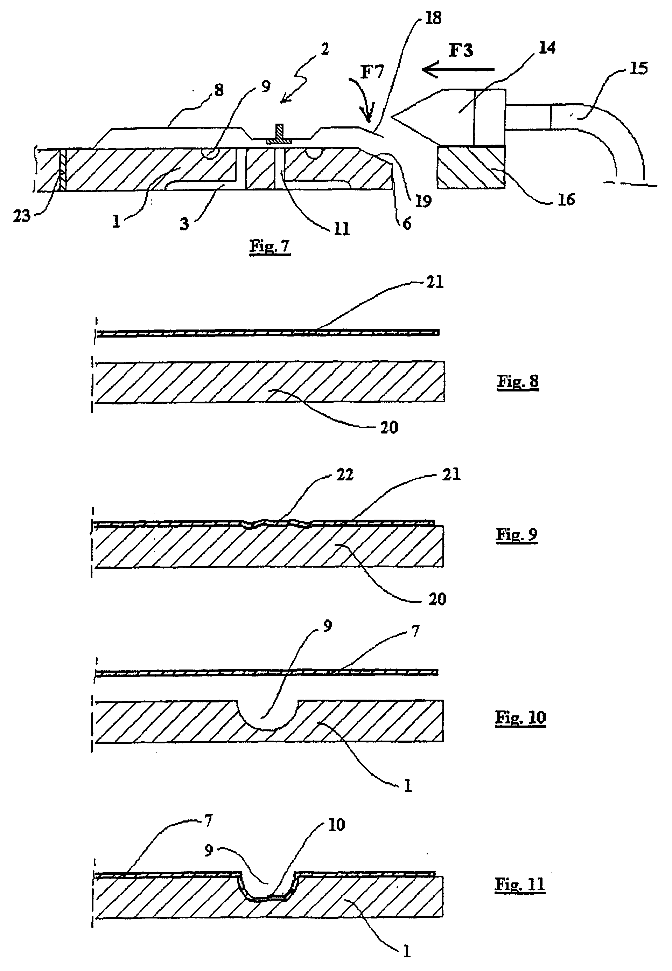

La présente invention concerne les problèmes de soudure de films sur un support solide tel que le corps d'une carte d'analyse. L'état de la technique est bien représenté aux figures 8 et 9 où l'on remarque que le corps de la carte 20 est essentiellement constitué de deux faces opposées parallèles l'une par rapport à l'autre et parfaitement plates. Un film 21 est situé au voisinage de l'une de ces faces, comme cela est bien représenté à la figure 8. Après avoir effectué une soudure 22, on remarque bien sur la figure 9 que le corps 20 est déformé et a entraîné également une déformation du film 21. Ainsi, cette déformation induit des dépressions et des élévations de la surface du corps de la carte 20 qui sont préjudiciables à l'utilisation ultérieure de cette carte, mais également qui peuvent entraîner un affaiblissement par endroit du film 21. L'ensemble peut être endommagé et éventuellement empêcher l'utilisation de la carte pour des analyses futures.

La présente invention a donc pour but d'éliminer le problème de soudure des films sur un support, tel qu'une carte d'analyse, généralement constitué de matières plastiques.

Sur les figures 10 à 11, on remarque que le corps de ladite carte 1 comporte à un certain endroit une rainure 9 ou renfoncement qui va recevoir en son sein une partie du film flexible 7, lesdits film 7 et corps de la carte 1 étant solidarisés l'un à l'autre par une soudure 10 située au fond de la rainure 9. De ce fait, la soudure 10 n'engendre aucune déformation de la surface supérieure de la carte 1 et donc aucun problème ultérieur pour utiliser ladite carte 1 et effectuer des analyses.

La figure 1 représente une vue générale en perspective d'un mode de réalisation selon l'invention. Les vannes sont partiellement représentées comme cela sera exposé ultérieurement. Ainsi sur cette figure, ne sont pas représentés, bien qu'étant présents, le film flexible 7 ainsi que l'ensemble des éléments constituant la vanne située au sein du corps de la carte 1. Néanmoins, les éléments, qui sont représentés, sont importants. On remarque tout d'abord une lamelle en bande 13 qui est constituée de plusieurs languettes 8 et est fixée sur la carte 1 par un moyen de fixation 23. Ces languettes 8 s'étendent sur l'un des côtés de la lamelle en bande 13 sensiblement perpendiculairement à cette lamelle 13, l'ensemble des languettes 8 étant parallèles les unes par rapport aux autres. De plus, la distance séparant deux languettes 8 adjacentes est constante, de sorte qu'il existe un pas séparant l'ensemble des languettes 8 adjacentes. Préférentiellement ce pas est un pas qui est identique à un pas utilisé dans le domaine de l'électronique, afin de diminuer le coût de réalisation des lamelles 13 ou d'utiliser des actionneurs existants déjà dans l'état de la technique. Un tel pas peut être compris entre 1 et 5 mm, et plus précisément est égal à 3,96 mm, 2,54 mm ou 1,28 mm.

Au niveau de ladite lamelle 13, il y a un contact direct entre le corps de la carte 1, et bien entendu entre le film 7 non représenté sur cette figure, et cette lamelle 13. Lorsque l'on va vers la droite de la figure, on remarque qu'il y a un pan oblique puis un pan parallèle à la surface supérieure de la carte 1 et enfin un autre pan oblique, les deux pans obliques formant entre eux un angle sensiblement de 90°, mais cette valeur n'est absolument pas limitative. De sorte que, en bas du second pan oblique, est présent un autre pan parallèle qui est situé au proche voisinage de la surface supérieure de la carte 1. C'est ce pan qui permet d'ouvrir ou de fermer directement le canal 3 constituant en partie la vanne 2 sous-jacente. A l'extrémité droite de ce pan, est présent un dernier pan en biseau 12 dont l'objet est de coopérer avec un actionneur de type piston 14, situé à l'extrémité droite de cette figure.

La tête de l'actionneur 14 est en forme de cône, cette forme permet à la tête de s'engager entre le biseau 12 du moyen d'ouverture de la languette flexible 8 et une surface biseautée 19 de la carte 1. Cette surface biseautée 19 est présente entre la première face 4 supérieure et le bord 6 de ladite carte 1, cette dernière 1 comprenant également une seconde face inférieure 5.

Le pan de la languette flexible 8, qui permet la fermeture est équipée d'un moyen de fermeture 11 ou pion en élastomère 11 dont la fonctionnalité sera décrite plus loin. Ce pion 11 ainsi que le moyen d'ouverture ou biseau 12 sont bien représentés sur la figure 2.

On remarque encore sur la figure 1, tout comme sur la figure 3, que l'ensemble des actionneurs 14 est monté sur un support 16, alors que chaque actionneur 14 est alimenté en air comprimé selon F1 ou F2 par l'intermédiaire de durits pour air comprimé 15.

On comprend mieux le fonctionnement sur la figure 3 en combinaison avec la figure 1. Lorsque l'air comprimé entre dans la durit 15, le piston 14 est mû selon F3 et la languette 8 est basculée selon F4. Lorsque, au contraire, l'air comprimé sort selon F2, les mouvements du piston 14 et de la languette 8 sont inversés par rapport aux flèches F3 et F4 de la figure 3.

On remarque sur la figure 3 que la vanne 2 est en position fermée puisque le moyen de fermeture ou pion en élastomère 11 vient compresser le point d'intersection d'un canal 3 avec la surface de la carte d'analyse 1 où le film 7 est présent.

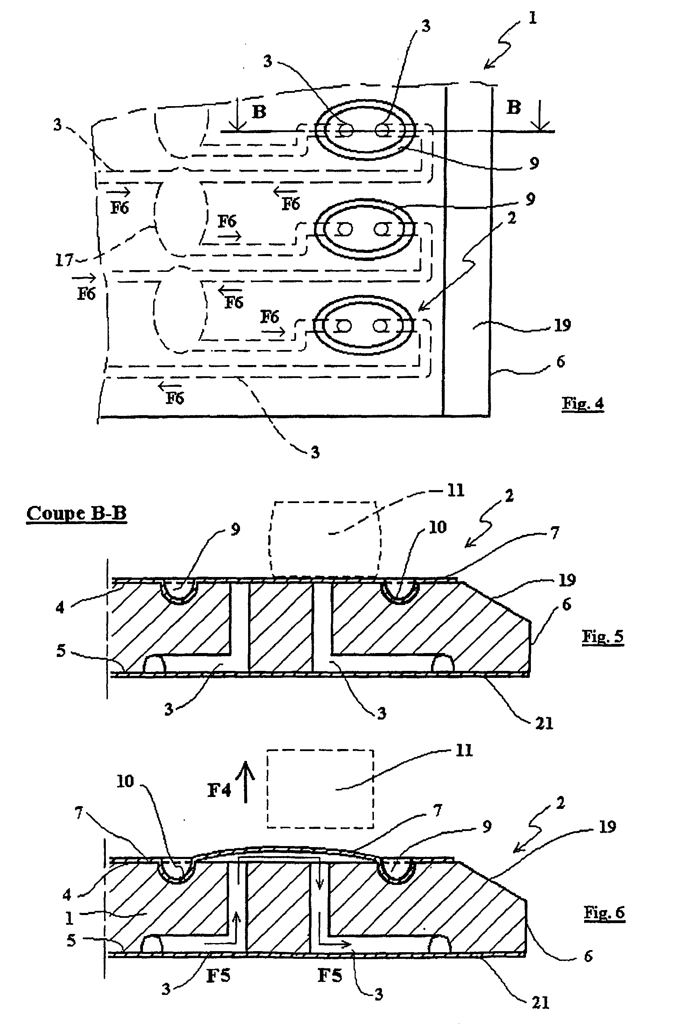

La figure 4 représente une vue de dessus de la figure 1 dans le cas où l'ensemble des languettes flexibles 8 a été retiré. Dans ce cas, on remarque que chaque vanne 2 est constituée d'une petite surface plane située au même niveau que le reste de la surface plane de ladite carte 1 (voir également les figures 5 et 6), cette petite surface comprenant au moins un canal d'arrivée 3 et un canal de départ 3, le point d'intersection entre cette surface et les canaux 3 d'arrivée et de sortie du fluide étant au contact du film 7 comme cela est bien représenté sur la figure 5. Dans ce cas, la vanne est fermée, on remarque d'ailleurs sur la figure 5 que le pion en élastomère 11 est représenté schématiquement, afin de bien montrer que celui-ci bouche un des deux canaux 3. Bien entendu, le pion 11 peut boucher un canal ou l'autre canal ou les deux canaux 3. De plus, au niveau de la vanne, il peut y avoir plus de canaux c'est-à-dire trois et au-delà.

On remarque également que la carte comporte un certain nombre de compartiments 17. Les compartiments 17 sont reliés aux vannes par l'intermédiaire des canaux 3 et il est possible mais cela n'est pas représenté sur la figure que d'autres vannes et d'autres compartiments soient présents sur le reste de la carte 1 ce qui permet d'effectuer des mélanges entre deux réseaux de canaux 3 situés en parallèle et non plus en série. C'est ce qui est bien représenté sur cette figure 4 où l'on remarque que les mouvements fluidiques selon F6 au niveau de la carte 1 peuvent rapprocher deux liquides pour effectuer un mélange ou une analyse au niveau d'un compartiment 17.

On remarque sur les figures 5 et 6 maintenant, que sur la vanne supérieure 4 de la carte 1, est présent un film flexible 7 qui n'est pas autocollant comme ceci a été expliqué en analyse de l'état de la technique. Ce film 7 est donc soudé en 10 au niveau d'une rainure 9 périphérique à la vanne 2. Néanmoins, sur la face inférieure 5 de ladite carte 1, il est possible d'utiliser un film autocollant 21 bien connu de l'état de la technique. Bien entendu, il est également possible d'avoir un deuxième film flexible 7 sur cette autre face en fonction des positions d'un seul côté ou de part et d'autre de la carte 1 de vannes 2. Les faces supérieures 4 et inférieures 5 sont reliées l'une à l'autre par un bord 6 où est présente, sur au moins un des côtés, comme cela est représenté sur les figures 1, 3 et 4 à 6, une surface biseautée 19.

En fait, le fluide ou les fluides présents dans la carte d'analyse 1 sont mus au sein de cette carte 1 par l'intermédiaire d'une mise sous pression ou une dépression qui est créée. Le mouvement du fluide selon F5 de la figure 6 est réalisé en relevant le pion 11 selon F4, de sorte que le film flexible va pouvoir être déformé et le fluide pourra passer selon F5 comme cela est bien représenté.

Selon un deuxième mode de réalisation de l'invention, il est possible d'inverser le rôle de la languette flexible 8 vue précédemment Ainsi sur la figure 7, on remarque que la languette flexible selon un autre mode de réalisation comprend à son extrémité libre un moyen de fermeture ou biseau 18 dont le biseau est de forme opposée à celui des autres figures 1 à 3. On remarque que le piston 14 agit non pas en dessous du biseau 18 mais au-dessus, de sorte que lorsque ledit piston 14 est en position, comme cela est représenté sur la figure 7, la vanne est ouverte. Par contre, dès que l'air comprimé, selon F1, est injecté, l'actionneur bouge selon F3 et la languette bascule selon F7, c'est-à-dire vers le bas ce qui ferme la vanne sous-jacente.

Une carte 1 selon la présente invention comporte donc un corps en forme sensiblement de parallélépipède, préférentiellement de parallélépipède rectangle. Tous les bords 6 sont donc linéaires et sont donc aptes à recevoir des vannes 2 selon l'invention, telles que décrites ci-dessus.

De manière préférentielle, au moins l'un des deux bords 6 de grandes longueurs uniquement comportent des vannes 2. Sur la figure 13, seul un bord 6 est représenté partiellement puisque seuls quatre vannes 2 adjacentes sont représentés.

La figure 12 représente les trois zones essentielles constituant le dispositif. Il y a sur la gauche la zone de contrôle 32, sur la droite la zone de stockage 31 des cartes 1, insérées dans le dispositif, et une zone intermédiaire 33 servant d'interface entre les zones de stockage 31 et de contrôle 32.

La zone de stockage 31 est par exemple constituée d'un tiroir de rangement, non représenté, comportant des rainures pour positionner chaque carte 1 avec un espacement entre les cartes 1 constant.

La zone de contrôle 32 est constituée d'un encadrement comportant deux montants ou vis sans fin 27, qui permettent, en tournant simultanément, le déplacement d'un chariot mobile 16 supportant l'ensemble des actionneurs ou électro-aimants 14. Ces électro-aimants 14 comportent chacun un piston qui peut être déplacé longitudinalement de la gauche vers la droite des figures 12 et 13 ou l'inverse.

La zone intermédiaire 33 fait donc le lien entre les deux zones 31 et 32 précédemment décrites. Elle 33 est constituée :
- d'une platine fixe 25 de guidage pour des pions 24 de manoeuvre des vannes 2, vannes 2 qui sont portées par les cartes 1 présentes dans la zone de stockage 31, sous l'action des électro-aimants 14 de la zone de contrôle 32,
- d'une grille de programmation ou plaque de contre appui mobile 26 qui permet le maintien des pions 24 dans la position qui leur a été donnée, et
- lesdits pions de manoeuvre 24.

On remarque sur les figures 12 et 13 qu'il y a autant de pions 24 que de vannes 2, mais qu'il n'y a qu'un seul électro-aimant 14 pour les vannes 2 d'une même carte 1. Bien entendu, ceci n'est pas limitatif et il est possible d'avoir plusieurs électro-aimants 14 pour les vannes 2 d'une même carte 1.

La programmation de la position des vannes 2, ouvertes ou fermées, est donc effectuée en retirant la plaque de contre appui 26 afin de débrayer les positions précédentes des pions 24, en actionnant les électro-aimants 14 pour mettre lesdits pions 24 dans une position sortie ou rentrée par rapport à ladite plaque 26, et en remettant la plaque de contre appui 26 de sorte que la position des pions est en relation avec les vannes ouvertes ou fermées que l'on souhaite obtenir.. Des tests ont montré qu'il n'y avait besoin que de 100 millisecondes (ms) pour programmer toutes les vannes 2, situées dans le même plan sur les cartes 1, par l'intermédiaire de tous les actionneurs 14. Lorsqu'il y a dix (10) vannes 2 par carte 1 et que l'on fait actives dix (10) cartes 1, il faut 2,5 secondes (s) pour changer quatre cents soixante-dix (470) vannes 1 de configuration.

Chaque pion de manoeuvre 24 est constitué d'une partie active 29 et d'un épaulement 30 formant butée, l'ensemble ayant une forme générale de « clou ». La partie active 29 coulisse aisément dans l'alésage qui lui est destiné au niveau de la platine 25, mais également au niveau de la rainure de la plaque 26 destinée au maintien en position de l'épaulement 30. Par contre ledit épaulement 30 est bloqué entre la platine 25 et la plaque 26 lorsque le pion 24 ouvre la vanne 2, et est bloqué par la seule plaque 26 lorsque ledit pion 24 ferme ladite vanne 2.

La platine 25 a donc un aspect de grille comportant autant d'alésages qu'il y a de pions 24. La plaque 26 a pour sa part un aspect de « peigne ».

S'il est aisé de comprendre le mouvement des pions 24 depuis la position rentrée vers la position sortie, en relation avec les figures 12 et 13, puisqu'il suffit à l'électro-aimant d'être déployé, il en va autrement pour le mouvement inverse. Ainsi pour passer de la position sortie vers la position rentrée, il est possible d'aimanter l'extrémité libre de l'électro-aimant qui est en contact avec ledit pion 24 ou de positionner un ressort entre le pion 24 et la plaque de contre appui 26 ou tout autre moyen de l'état de la technique. Il convient également de prévoir tout moyen permettant le maintien en position desdits pions 24 dans les alésages.

A noter enfin la présence de joints toriques 28 entre ladite platine 25, au niveau des alésages, et les pions de manoeuvre 24.

### REFERENCES

1. Carte d'analyse
2. Vanne
3. Canal
4 et 5. Faces de la carte 1
6. Bord de la carte 1
7. Film flexible et/ou qui peut être déformé
8. Moyen de compression du film 7 ou languette flexible
9. Renfoncement ou rainure périphérique à la vanne 2
10. Soudure périphérique située au fond de la rainure 9
11. Moyen de fermeture étanche ou pion en élastomère
12. Moyen d'ouverture ou biseau
13. Lamelle en bande constituée de plusieurs languettes 8
14. Actionneur de type piston ou électro-aimant de programmation
15. Durit pour air comprimé
16. Support ou chariot mobile
17. Compartiment de la carte 1
18. Moyen de fermeture ou biseau
19. Surface biseautée de la carte 1
20. Corps de la carte selon l'état de la technique
21. Film selon l'état de la technique
22. Soudure entre le corps de la carte 20 et le film 21
23. Moyen de fixation de la lamelle 13
24. Pion de manoeuvre
25. Platine fixe de guidage des pions 24
26. Plaque de contre appui mobile ou grille de programmation
27. Vis sans fin
28. Joint annulaire
29. Partie active de chaque pion 24
30. Epaulement formant butée de chaque pion 24
31. Zone de stockage
32. Zone de contrôle
33. Zone intermédiaire servant d'interface entre zones de stockage 31 et de contrôle 32
35. Rainure de la plaque 26 destinée au maintien en position de l'épaulement 30
F1. Entrée d'air comprimé des moyens d'actionnement 12
F2. Sortie d'air comprimé des moyens d'actionnement 12
F3. Mouvement des moyens d'actionnement 12
F4. Basculement de la languette 8
F5. Transfert fluidique au niveau de la vanne 2
F6. Mouvements fluidiques au niveau de la carte 1
F7. Basculement de la languette selon le mode de réalisation de la figure 7

## Revendications

1. Vanne (2), traversée par au moins un canal (3), permettant de diriger au moins un fluide (F5) mû par des moyens de transfert au sein d'une carte d'analyse (1), la carte (1) comportant doux faces (4 et 5) reliées l'une (4) à l'autre (5) par un bord (6), **caractérisée par le fait qu'**elle est constituée d'une part d'un film (7), flexible et/ou qui peut être déformé, fixé en partie sur au moins l'une des faces (4 et/ou 5) de ladite carte (1), et d'autre part d'un moyen de compression (8) du film (7), moyen (8) qui peut être activé ou désactivé, et que la fixation est réalisée au niveau d'au moins l'une des faces (4 et/ou 5), par exemple plane, par l'intermédiaire d'une fixation située au niveau d'un renfoncement périphérique (9) à la vanne (2), tel qu'une rainure (9).

2. Vanne, selon la revendication 1, **caractérisée par le fait que** la fixation du film (7) sur la carte (1) est périphérique à l'ensemble des canaux (3) concerné par la vanne (2), à savoir au moins un canal (3) d'arrivée d'un fluide et au moins un canal (3) de départ d'un fluide, les deux fluides pouvant être identiques ou différents.

3. Vanne, selon l'une quelconque des revendications 1 ou 2, **caractérisée par le fait que** la fixation est assurée par une soudure (10) périphérique à la vanne (2).

4. Vanne, selon l'une quelconque des revendications 1 à 3, **caractérisée par le fait que** le moyen de compression (8) agit sur le film (7) au niveau du point d'intersection entre au moins l'un des canaux (3) de la vanne (2) et la face (4 ou 5) concernée de la carte (1).

5. Vanne, selon l'une quelconque des revendications 1 à 4, **caractérisée par le fait que** le moyen de compression (8) est constitué par une languette flexible (8).

6. Vanne, selon l'une quelconque des revendications 1 à 5, **caractérisée par le fait que** le moyen de compression (8) comporte un moyen de fermeture (11), tel qu'un pion en élastomère (11), et un moyen d'ouverture ou de fermeture, tel qu'un biseau (12 ou 18), qui coopère avec des moyens d'actionnement (14).

7. Vanne, selon l'une quelconque des revendications 1 à 6, **caractérisée par le fait que** le film (7), au niveau de la vanne (2), est au contact de la face plane (4 ou 5) de la carte (1), lorsque ladite vanne (2) est en position fermée, et est surélevée par rapport à ladite face plane (4 ou 5), lorsque la vanne (2) est en position ouverte.

8. Carte d'analyse (1) constituée d'au moins deux, préférentiellement une pluralité de vannes (2), selon l'une quelconque des revendications 1 à 7, vannes (2) qui sont positionnées côte à côte et sont, en toute ou partie, réparties le long d'au moins un bord (6) de la dite carte (1), préférentiellement les moyens de compression (8) affectés à la compression des vannes (2), positionnées côte à côte, sont reliés les uns aux autres pour former une lamelle en bande (13).

9. Carte selon la revendication 8, de forme sensiblement deparallélépipède, **caractérisée par le fait que** le ou les bords (6), où sont présentes les vannes (2), sont rectilignes, et que la distance séparant ledit bord (6) par rapport au point d'implantation de chaque vanne (2) est constante.

10. Carte, selon l'une quelconque des revendication 8 ou 9, **caractérisée par le fait que** deux vannes (2) adjacentes positionnées côte à côte sont séparées avec un pas compris entre 1 et 5 mm, et préférentiellement avec un pas ayant des valeurs utilisées dans le domaine électronique, telles que 3,96 mm, 2,54 mm ou 1,28 mm.

11. Dispositif permettant de mettre en oeuvre plusieurs cartes (1) selon l'une quelconque des revendications 8 à 10, **caractérisé par le fait qu'**il est constitué par :
- une zone de stockage (31) des cartes (1), cartes qui sont disposées parallèlement les unes aux autres, avec l'ensemble des vannes (2) d'un même bord (6) situé dans un même plan faisant face à une zone dite intermédiaire (33),
- une zone de contrôle (32) de l'ouverture et de la fermeture des vannes (2) associée à une commande manuelle ou automatique, et constituée d'actionneurs (14), tels que des électro-aimants, dont les mouvements longitudinauxs'effectuent en direction de ladite zone intermédiaire (33), et
- ladite zone intermédiaire (33) servant d'interface entre les zones de stockage (31) et de contrôle (32), cette zone intermédiaire (33) étant constituée de pions de manoeuvre (24) ayant au moins deux positions, l'une permettant l'ouverture l'autre permettant la fermeture des vannes (2).

12. Dispositif, selon la revendication 11, **caractérisé par le fait qu'**il y a un actionneur (14) par carte (1), et qu'il y a un pion de manoeuvre (24) par vanne (2).

13. Dispositif selon l'une quelconque des revendications 11 ou 12, **caractérisé par le fait que** le mouvement de l'actionneur (14) est coaxial à l'axe longitudinal du pion de manoeuvre (24) et de la vanne (2), qui est activée ou désactivée.

14. Dispositif selon l'une quelconque des revendications 11 à 13, **caractérisé par le fait que** l'ensemble des actionneurs (14) est monté dans le même plan et est mobile selon un axe parallèle au plan formé par l'ensemble des bords (6) des cartes (1) portant les vannes (2) qui peuvent être actionnées par ces actionneurs (14),

15. Dispositif selon l'une quelconque des revendications 11 à 14, **caractérisé par le fait que** les pions de manoeuvre (24) ont deux positions possibles, l'une permettant l'ouverture l'autre permettant la fermeture des vannes (2), chaque position étant de part et d'autre d'un élément de délimitation (26).

16. Dispositif selon la revendication 15. **caractérisé par le fait que** l'élément de délimitation (26) est mobile entre deux positions extrêmes, l'une où il empêche le mouvement des pions (24), et l'autre où ce mouvement desdits pions (24) est possible.

## Claims

1. A valve (2), crossed by at least one channel (3), allowing to direct at least one fluid (F5) displaced by transfer means within a test sample card (1), the card (1) featuring two faces (4 and 5) connected to one another (4) (5) by an edge (6), **characterized in that** it consists on the one hand of a flexible film (7), and/or which can be distorted, part of which is fixed to at least one of the faces (4 and/or 5) of said card (1), and on the other hand of a film (7) compression means (8), which may be activated or deactivated, and **in that** the securing is made on at least one of the faces (4 and/or 5), for example a plane face, by means of a securing feature located at the level of a recession (9) provided around the valve (2), such as a groove (9).

2. The valve, according to claim 1, **characterized in that** the securing of the film (7) on the card (1) is peripheral to the set of channels (3) concerned by the valve (2), namely at least one fluid entry channel (3) and at least one fluid exit channel (3), whether the fluids are identical or different.

3. The valve, according to either claim 1 or 2, **characterized in that** the securing is ensured by a heat seal (10) peripheral to the valve (2).

4. The valve, according to any of claims 1 through 3, **characterized in that** the compression means (8) acts on the film (7) at the intersection point between at least one of the channels (3) of the valve (2) and the face (4 or 5) concerned of the card (1).

5. The valve, according to any of claims 1 through 4, **characterized in that** the compression means (8) consists of a flexible tab (8).

6. The valve, according to any of claims 1 through 5, **characterized in that** the compression means (8) features a closing means (11), such as an elastomer pin (11), and an opening and closing means, such as a wedge (12 or 18), which synergizes with the actuation mechanisms (14).

7. The valve, according to any of claims 1 through 6, **characterized in that** the film (7), on the valve (2), is in contact with the plane face (4 or 5) of the card (1), when said valve (2) is in closed position, and is lifted in relation to said plane face (4 or 5), when the valve (2) is in open position.

8. A test sample card (1) made up of at least two, preferentially a plurality of valves (2), according to any of claims 1 trough 7, valves (2) which are positioned side by side and are, fully or partly, distributed along at least one edge (6) of said card (1), preferentially the compression means (8) dedicated to the compression of the valves (2), positioned side by side, are connected together for forming a strip assembly (13).

9. The card, according to claim 8, having a substantially parallelepiped arrangement, **characterized in that** the edge(s) (6), where the valves (2) are located, is(are) rectilinear, and **in that** the distance separating said edge (6) in relation to the location of each valve (2) is constant.

10. The card, according to any of claims 8 or 9, **characterized in that** two adjacent valves (2) positioned side by side are separated by a space between 1 and 5mm, and preferably with spacing having values used in the field of electronics, such as 3.96mm, 2.54mm or 1.28mm.

11. The device enabling several cards (1) to be implemented according to any of claims 8 trough 10, **characterized in that** it consists of the following:
- a storage area (31) for the cards (1), cards (1) which are placed parallel to one another, with all of the valves (2) on the same edge (6) located within the same plane facing the intermediate area (33),
- a valve (2) opening and closing inspection area (32) associated with a manual or automatic control system, and made of actuators (14), such as electromagnets, for the which the longitudinal movements take place in the direction of said intermediate area (33), and
- said intermediate area (33) being used as an interface between the storage (31) and inspection (32) areas, this intermediate area (33) is made up of maneuvering pins (24) having at least two positions, one allowing the opening and the other allowing the closure of the valves (2).

12. The device, according to claim 11, **characterized in that** it has one actuator (14) per card (1), and that there is one maneuvering pin (24) per valve (2).

13. The device, according to either claim 11 or 12, **characterized in that** the movement of the actuator (14) is coaxial to the longitudinal axis of the maneuvering pin (24) and the valve (2), which is activated or deactivated.

14. The device, according to any of claims 11 through 14, **characterized in that** the set of actuators (14) is mounted in the same plane and is mobile along an axis parallel to the plane formed by all of the edges (6) of the cards (1) having the valves (2) which can be activated by these actuators (14).

15. The device, according to any of claims 11 through 14, **characterized in that** the maneuvering pins (24) have two possible positions, one allowing the opening and the other allowing the closure of the valves (2), each position being on each side of a confining element (26).

16. The device, according to claim 15, **characterized in that** the confining element (26) is mobile between two extreme positions, one where it prevents the pins (24) from moving, and the other where the movement of said pins (24) is possible.

## Patentansprüche

1. Ventil (2), das von mindestens einem Kanal (3) durchsetzt ist und die Lenkung mindestens eines Fluids (FS) gestattet, das im Inneren einer Analysekarte (1) durch Übertragungsmittel bewegt wird, wobei die Karte (1) zwei Seiten (4 und 5) aufweist, deren eine (4) mit der anderen (5) durch einen Rand (6) verbunden ist, **dadurch gekennzeichnet, daß** es einerseits aus einer Folie (7), die flexibel ist und/oder verformt sein kann und die zum Teil auf mindestens einer der Seiten (4 und/oder 5) der Karte (1) befestigt ist, und andererseits aus einem Mittel (8) zum Komprimieren der Folie (7) besteht, das aktiviert und deaktiviert werden kann, und daß die Befestigung auf Höhe mindestens einer der Seiten (4 und/oder 5), die beispielsweise eben ist, über eine Befestigung vor sich geht, die auf Höhe einer sich über den Umfang des Ventils (2) erstreckenden Vertiefung (9), wie z.B. einer Nut (9), gelegen ist.

2. Ventil nach Anspruch 1, **dadurch gekennzeichnet, daß** die Befestigung der Folie (7) auf der Karte (1) auf dem Umfang der von dem Ventil (2) betroffenen Gesamtheit der Kanäle (3) vorgesehen ist, und zwar mindestens ein Kanal (3) für den Eintritt eines Fluids und mindestens ein Kanal (3) für den Austritt eines Fluids, wobei die beiden Fluide gleich oder verschieden sein können.

3. Ventil nach einem der Ansprüche 1 oder 2, **dadurch gekennzeichnet, daß** die Befestigung durch eine sich über den Umfang des Ventils (2) erstreckende Verschweißung (10) gewährleistet ist.

4. Ventil nach einem der Ansprüche 1 bis 3, **dadurch gekennzeichnet, daß** das Komprimierungsmittel (8) auf die Folie (7) auf Höhe des Schnittpunkts mindestens eines der Kanäle (3) des Ventils (2) mit der betreffenden Seite (4 oder 5) der Karte (1) einwirkt.

5. Ventil nach einem der Ansprüche 1 bis 4, **dadurch gekennzeichnet, daß** das Komprimierungsmittel (8) aus einer flexiblen Lamelle (8) besteht.

6. Ventil nach einem der Ansprüche 1 bis 5, **dadurch gekennzeichnet, daß**.das Komprimierungsmittel (8) ein Verschlußmittel (11), wie z.B. einen Elastomerstift (11), und ein mit Betätigungsmitteln (14) zusammenwirkendes Öffnungsoder Verschlußmittel, wie z.B. eine Abschrägung (12 oder 18) umfaßt.

7. Ventil nach einem der Ansprüche 1 bis 6, **dadurch gekennzeichnet, daß** die Folie (7) auf Höhe des Ventils (2) mit der ebenen Seite (4 oder 5) der Karte (1) in Kontakt ist, wenn das Ventil (2) in geschlossener Stellung ist, und von dieser ebenen Seite (4 oder 5) abgehoben ist, wenn das Ventil (2) in offener Stellung ist.

8. Analysekarte (1), bestehend aus mindestens zwei und vorzugsweise einer Vielzahl von Ventilen (2) nach einem der Ansprüche 1 bis 7, wobei diese Ventile (2) nebeneinander angeordnet sind und ganz oder teilweise längs mindestens eines Rands (6) der Karte (1) verteilt sind, wobei die Komprimierungsmittel (8), die zur Komprimierung der nebeneinander angeordneten Ventile (2) betimmt sind, miteinander verbunden sind, um ein Lamellenband (13) zu bilden.

9. Karte nach Anspruch 8 mit Parallelepipedform, **dadurch gekennzeichnet, daß** der oder die Ränder (6), an denen die Ventile (2) angordnet sind, geradlinig sind und daß der Abstand dieses Rands (6) von der Stelle der Implantation jedes Ventils (2) konstant ist.

10. Karte nach einem der Ansprüche 8 oder 9, **dadurch gekennzeichnet, daß** zwei benachbarte nebeneinander angeordnete Ventile (2) in einem Schritt zwischen 1 und 5 mm, vorzugsweise in einem Schritt mit im Bereich der Elektronik verwendeten Werten, wie z.B. 3,96 mm, 2,54 mm oder 1,28 mm, voneinander getrennt sind.

11. Vorrichtung zur Verwendung von mehreren Karten (1) nach einem der Ansprüche 8 bis 10, **dadurch gekennzeichnet, daß** sie besteht aus:
- einer Zone (31) zum Speichern der Karten (1), wobei diese Karten zueinander parallel angeordnet sind und die Gesamtheit der Ventile (2) eines gemeinsamen Randes (6) in einer gemeinsamen Ebene gelegen ist, die einer Zwischenzone (33) gegenübersteht,
- einer Zone (32) zur Steuerung der Öffnung und der Schließung der Ventile (2), der eine manuelle oder automatische Steuerung zugeordnet ist und die aus Betätigungsorganen (14), wie z.B. Elektromagneten, besteht, deren Längsbewegungen in Richtung der Zwischenzone (33) stattfinden, und
- dieser Zwischenzone (33), die als Schnittstelle zwischen der Speicherzone (31) und der Steuerzone (32) dient und aus Betätigungsstiften (24) besteht, die mindestens zwei Stellungen einnehmen können, von denen die eine die Öffnung und die andere die Schließung der Ventile (2) gestatten.

12. Vorrichtung nach Anspruch 11, **dadurch gekennzeichnet, daß** ein Betätigungsorgan (14) pro Karte (1) vorgesehen ist und daß ein Betätigungsstift (24) pro Ventil (2) vorgesehen ist.

13. Vorrichtung nach einem der Ansprüche 11 oder 12, **dadurch gekennzeichnet, daß** die Bewegung des Betätigungsorgans (14) zur Längsachse des Betätigungsstifts (24) und des Ventils (2), das aktiviert und deaktiviert wird, koaxial ist.

14. Vorrichtung nach einem der Ansprüche 11 bis 13, **dadurch gekennzeichnet, daß** die Gesamtheit der Betätigungsorgane (14) in der gleichen Ebene montiert ist und in einer Achse beweglich ist, die zu der Ebene parallel ist, die von der Gesamtheit der Ränder (6) der Karten (1) gebildet wird, die die Ventile (2) tragen, die durch diese Betätigungsorgane (14) betätigt werden können.

15. Vorrichtung nach einem der Ansprüche 11 bis 14, **dadurch gekennzeichnet, daß** die Betätigungsstifte (24) zwei Stellungen einnehmen können, deren eine die Öffnung und deren andere die Schließung der Ventile (2) gestattet, wobei jede Stellung sich.zu beiden Seiten eines Begrenzungselements (26) befindet.

16. Vorrichtung nach Anspruch 15, **dadurch gekennzeichnet, daß** das Begrenzungselement (26) zwischen zwei Endstellungen beweglich ist, in deren einer es die Bewegung der Stifte (24) verhindert, und in deren anderer die Bewegung der Stifte (24) möglich ist.
